(19) Europäisches Patentamt / European Patent Office / Office européen des brevets

(11) **EP 4 579 974 A1**

(12) **EUROPEAN PATENT APPLICATION**
published in accordance with Art. 153(4) EPC

(43) Date of publication:
**02.07.2025 Bulletin 2025/27**

(21) Application number: **23864404.1**

(22) Date of filing: **20.06.2023**

(51) International Patent Classification (IPC):
*H02J 3/00* (2006.01)    *H02J 3/24* (2006.01)
*H02J 3/38* (2006.01)    *H02J 3/46* (2006.01)

(86) International application number:
**PCT/CN2023/101352**

(87) International publication number:
**WO 2024/055665 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.09.2022 CN 202211131357**

(71) Applicant: **Huawei Digital Power Technologies
Co., Ltd.
Shenzhen, Guangdong 518043 (CN)**

(72) Inventors:
• **HE, Jinwei
  Tianjin 300072 (CN)**
• **TAN, Tian
  Shenzhen, Guangdong 518043 (CN)**
• **XIN, Kai
  Shenzhen, Guangdong 518043 (CN)**

(74) Representative: **Gill Jennings & Every LLP
The Broadgate Tower
20 Primrose Street
London EC2A 2ES (GB)**

(54) **POWER SUPPLY SYSTEM AND CONTROL METHOD THEREFOR**

(57) Embodiments of this application disclose a power supply system and a control method thereof. The power supply system includes N distributed generations and at least one detection control unit. The N distributed generations are connected in parallel or in series and then connected to a power grid, and N is an integer greater than 1. The detection control unit is configured to: when detecting that oscillation of the power supply system exceeds a preset threshold range, obtain a power compensation control proportion of each distributed generation based on impedance from each distributed generation to a point of common coupling of the power supply system. The power compensation control proportion is a proportion of power output by each distributed generation to total power output by the power supply system. The detection control unit is further configured to control a power output proportion of each distributed generation based on the power compensation control proportion. According to embodiments of this application, the oscillation of the power supply system can be suppressed, and normal and stable operation of the power supply system can be ensured. In addition, low implementation complexity and low implementation costs can be achieved without changing an original control circuit or adding an additional device.

FIG. 6

**Description**

This application claims priority to Chinese Patent Application No. 202211131357.4, filed with the China National Intellectual Property Administration on September 16, 2022 and entitled "POWER SUPPLY SYSTEM AND CONTROL METHOD THEREOF", which is incorporated herein by reference in its entirety.

**TECHNICAL FIELD**

This application relates to the field of electronic power technologies, and in particular, to a power supply system and a control method thereof.

**BACKGROUND**

As a proportion of wind-solar new energy yields continuously increases, and application of power electronic apparatuses continuously grows, a problem of wide-frequency oscillation in new power systems becomes increasingly prominent. Oscillation in the power system can be defined as multi-timescale dynamic interaction that is between a source/device and a grid and that is formed by coupling a renewable energy unit, an alternating current/direct current converter, and control of the alternating current/direct current converter through a complex power grid. In a power electronic device, a response timescale of a control step is wide (from a level less than 1 ms to a level of s). As a result, a new power system in which power electronic devices are widely used generates wide-frequency oscillation whose frequency ranges from several Hz to kHz.

Wide-frequency oscillation of a power supply system has the following disadvantages: (1) A device is damaged. The oscillation spreads quickly in the system. This triggers overvoltage and overcurrent of the device before a protection relay acts. (2) Power supply reliability is weakened. The oscillation may cause generator tripping. This causes a loss of an energy yield of a new energy site and even causes large-scale power outage, and affects power supply safety and stability of the system. (3) Quality of electric energy is affected. The oscillation may generate large harmonics and interharmonics. Therefore, to improve reliability of power supply systems such as a photovoltaic power station, an energy storage power station, and a microgrid, a wide-frequency oscillation suppression technology is required. However, in an existing solution for suppressing wide-frequency oscillation, system stability is poor, implementation complexity is high, and

**SUMMARY**

Embodiments of this application provide a power supply system and a control method thereof, to suppress oscillation of the power supply system and ensure normal and stable operation of the power supply system.

According to a first aspect, an embodiment of this application provides a power supply system. The power supply system includes N distributed generations and at least one detection control unit, the N distributed generations are connected in parallel or in series and then connected to a power grid, and N is an integer greater than 1. The detection control unit is configured to: when detecting that oscillation of the power supply system exceeds a preset threshold range, obtain a power compensation control proportion of each distributed generation based on impedance from each distributed generation to a point of common coupling of the power supply system. The power compensation control proportion is a proportion of power output by each distributed generation to total power output by the power supply system. The detection control unit is further configured to control a power output proportion of each distributed generation based on the power compensation control proportion.

When it is detected that the oscillation of the power supply system exceeds the preset threshold range, a power compensation control proportion of each distributed generation is adjusted based on the impedance from each distributed generation to the point of common coupling of the power supply system, so that the power output proportion of each distributed generation is controlled based on the adjusted power compensation control proportion. In this way, the oscillation of the power supply system is suppressed, and normal and stable operation of the power supply system is ensured. In addition, low implementation complexity and low implementation costs can be achieved without changing an original control circuit or adding an additional device.

In a possible design, the detection control unit is further configured to: when impedance from a first distributed generation in the N distributed generations to the point of common coupling is greater than a first threshold, control active power output by the first distributed generation to be less than first preset power. Alternatively, the detection control unit is further configured to: when impedance from a first distributed generation to the point of common coupling is less than or equal to a first threshold, control active power output by the first distributed generation to be greater than or equal to first preset power. That is, larger impedance from any one of the N distributed generations to the point of common coupling indicates lower active power output by the distributed generation, and smaller impedance from any one of the N distributed generations to the point of common coupling indicates higher active power output by the distributed generation. Active power output by each distributed generation is adjusted, so that the oscillation of the power supply system is suppressed, and the power supply system is ensured to resume the normal and stable operation.

In another possible design, the detection control unit is further configured to: when impedance from a second distributed generation in the N distributed generations to the point of common coupling is greater than a second threshold, control reactive power output by the second distributed generation to be greater than second preset power. Alternatively, the detection control unit is further configured to: when impedance from a second distributed generation to the point of common coupling is less than or equal to a second threshold, control reactive power output by the second distributed generation to be less than or equal to second preset power. That is, larger impedance from any one of the N distributed generations to the point of common coupling indicates higher reactive power output by the distributed generation, and smaller impedance from any one of the N distributed generations to the point of common coupling indicates lower reactive power output by the distributed generation. Reactive power output by each distributed generation is adjusted, so that the oscillation of the power supply system is suppressed, and the power supply system is ensured to resume the normal and stable operation.

In another possible design, the detection control unit is further configured to: when it is detected that the oscillation of the power supply system exceeds the preset threshold range, control a sum of active power output by the N distributed generations to be equal to total active power output by the power supply system before the oscillation of the power supply system exceeds the preset threshold range; and control a sum of reactive power output by the N distributed generations to be equal to total reactive power output by the power supply system before the oscillation of the power supply system exceeds the preset threshold range. That is, on the premise that the total active power and the total reactive power that are output by the power supply system are not changed, the active power and the reactive power that are output by each distributed generation are adjusted, so that the oscillation of the power supply system is suppressed, and the power supply system is ensured to resume the normal and stable operation.

In another possible design, the power compensation control proportion includes an active power compensation control proportion, and the active power compensation control proportion is a proportion of the active power output by each distributed generation to the total active power output by the power supply system. The detection control unit is further configured to: when it is detected that the oscillation of the power supply system exceeds the preset threshold range, number each distributed generation in ascending order of impedance from distributed generations to the point of common coupling, obtain the active power compensation control proportion of each distributed generation based on a number of each distributed generation and N, and control, based on the active power compensation control proportion, each distributed generation to output the active power.

In another possible design, the active power compensation control proportion $\varepsilon_{p(k)}$ of a distributed generation numbered k in the N distributed generations satisfies:

$$\varepsilon_{p(k)} = \frac{1}{N} - (k - \frac{N}{2})G_{reg\_p};$$

and

active power $P_{ref(k)}$ output by the distributed generation numbered k in the N distributed generations satisfies:

$$P_{ref(k)} = P_{all}\varepsilon_{p(k)} + (SOC_{ave} - SOC_k)G_{pi\_soc}$$

$$G_{reg\_p} = K_{p\_p} + \frac{K_{p\_i}}{s}$$

Herein, k is an integer greater than or equal to 1 and less than or equal to N, $, K_{p\_p}$ is a first proportional coefficient, $K_{p\_i}$ is a first integral coefficient, s is a Laplace operator, $P_{all}$ is the total active power output by the power supply system, $SOC_{ave}$ is an average value of states of charge SOCs of the N distributed generations, $SOC_k$ is an SOC of the distributed generation numbered k, and $G_{pi\_soc}$ is a transfer function.

In another possible design, the power compensation control proportion includes a reactive power compensation control proportion, and the reactive power compensation control proportion is a proportion of the reactive power output by each distributed generation to the total reactive power output by the power supply system. The detection control unit is further configured to: when it is detected that the oscillation of the power supply system exceeds the preset threshold range, number each distributed generation in ascending order of impedance from the distributed generations to the point of common coupling, obtain the reactive power compensation control proportion of each distributed generation based on a number of each distributed generation and N, and control, based on the reactive power compensation control proportion, each distributed generation to output the reactive power.

In another possible design, a reactive power compensation control proportion $\varepsilon_{q(k)}$ of a distributed generation numbered k in the N distributed generations satisfies:

$$\varepsilon_{q(k)} = \frac{1}{N} + (k - \frac{N}{2})G_{reg\_q};$$

and

reactive power $Q_{ref(k)}$ output by the distributed generation numbered k in the N distributed generations satisfies:

$$Q_{ref(k)} = Q_{all}\varepsilon_{q(k)}$$

$$G_{reg\_q} = K_{q\_p} + \frac{K_{q\_i}}{s}$$

Herein, k is an integer greater than or equal to 1 and less than or equal to N, , $K_{q\_p}$ is a second proportional coefficient, $K_{q\_i}$ is a second integral coefficient, s is a Laplace operator, and $Q_{all}$ is the total reactive power output by the power supply system.

In the foregoing, a distributed generation is numbered in the ascending order of the impedance from the distributed generations to the point of common coupling. Smaller impedance from the distributed generation to the point of common coupling indicates a smaller number of the distributed generation, a larger active power compensation control proportion $\varepsilon_{p(k)}$, and a smaller reactive power compensation control proportion $\varepsilon_{q(k)}$. Therefore, higher active power output by the distributed generation indicates lower reactive power output by the distributed generation. Alternatively, larger impedance from the distributed generation to the point of common coupling indicates a larger number of the distributed generation, a smaller active power compensation control proportion $\varepsilon_{p(k)}$, and a larger reactive power compensation control proportion $\varepsilon_{q(k)}$. Therefore, lower active power output by the distributed generation indicates higher reactive power output by the distributed generation. The active power and the reactive power that are output by each distributed generation are dynamically adjusted, so that the oscillation of the power supply system is suppressed, and the power supply system is ensured to resume the normal and stable operation.

In another possible design, the detection control unit is further configured to: collect a current and a voltage of the point of common coupling of the power supply system, and obtain an effective value of an oscillation component of the voltage, an effective value of an oscillation component of the current, and an effective value of an oscillation component of a system frequency based on the voltage and the current of the point of common coupling. The detection control unit is further configured to: when the effective value of the oscillation component of the voltage is greater than a third threshold, the effective value of the oscillation component of the current is greater than a fourth threshold, and/or the effective value of the oscillation component of the system frequency is greater than a fifth threshold, learn that the oscillation of the power supply system exceeds the preset threshold range. The current and the voltage of the point of common coupling are collected, so that whether the oscillation of the power supply system exceeds the preset threshold range is detected, to ensure accuracy of detecting that the oscillation of the power supply system occurs. In this way, when it is detected that the oscillation of the power supply system exceeds the preset threshold range, the reactive power output by the distributed generation is adjusted, so that the oscillation of the power supply system is suppressed, and the power supply system is ensured to resume the normal and stable operation.

According to a second aspect, an embodiment of this application provides a power control method for a power supply system. The method is applicable to at least one detection control unit in the power supply system, the power supply system further includes N distributed generations, the N distributed generations are connected in parallel or in series and then connected to a power grid, and N is an integer greater than 1. In the method, when it is detected that oscillation of the power supply system exceeds a preset threshold range, a power compensation control proportion of each distributed generation is obtained based on impedance from each distributed generation to a point of common coupling of the power supply system, where the power compensation control proportion is a proportion of power output by each distributed generation to total power output by the power supply system; and a power output proportion of each distributed generation is controlled based on the power compensation control proportion.

When it is detected that the oscillation of the power supply system exceeds the preset threshold range, a power compensation control proportion of each distributed generation is adjusted based on the impedance from each distributed generation to the point of common coupling of the power supply system, so that the power output proportion of each distributed generation is controlled based on the adjusted power compensation control proportion. In this way, the oscillation of the power supply system is suppressed, and normal and stable operation of the power supply system is ensured. In addition, low implementation complexity and low implementation costs can be achieved without changing an original control circuit or adding an additional device.

In a possible design, when impedance from a first distributed generation in the N distributed generations to the point of common coupling is greater than a first threshold, active power output by the first distributed generation is controlled to be less than first preset power. Alternatively, when impedance from a first distributed generation to the point of common coupling is less than or equal to a first threshold, active power output by the first distributed generation is controlled to be greater than or equal to first preset power. That is, larger impedance from any one of the N distributed generations to the point of common coupling indicates lower active power output by the distributed generation, and smaller impedance from any one of the N distributed generations to the point of common coupling indicates higher active power output by the distributed generation. Active power output by each distributed generation is adjusted, so that the oscillation of the power supply system is suppressed, and the power supply system is ensured to resume the normal and stable operation.

In another possible design, when impedance from a second distributed generation in the N distributed generations to the point of common coupling is greater than a second threshold, reactive power output by the second distributed generation is controlled to be greater than second preset power. Alternatively, when impedance from a second distributed generation to the point of common coupling is less than or equal to a second threshold, reactive power output by the second distributed generation is controlled to be less than or equal to second preset power. That is, larger impedance from any one of the N distributed generations to the point of common coupling indicates higher reactive power output by the distributed generation, and smaller impedance from any one of the N distributed generations to the point of common coupling indicates lower reactive power output by the distributed generation. Reactive power output by each distributed generation is adjusted, so that the oscillation of the power supply system is suppressed, and the power supply system is ensured to resume the normal and stable operation.

In another possible design, when it is detected that the oscillation of the power supply system exceeds the preset threshold range, a sum of active power output by the N distributed generations is controlled to be equal to total active power output by the power supply system before the oscillation of the power supply system exceeds the preset threshold range, and a sum of reactive power output by the N distributed generations is controlled to be equal to total reactive power output by the power supply system before the oscillation of the power supply system exceeds the preset threshold range. That is, on the premise that the total active power and the total reactive power that are output by the power supply system are not changed, the active power and the reactive power that are output by each distributed generation are dynamically adjusted, so that the oscillation of the power supply system is suppressed, and the power supply system is ensured to resume the normal and stable operation.

In another possible design, the power compensation control proportion includes an active power compensation control proportion, and the active power compensation control proportion is a proportion of the active power output by each distributed generation to the total active power output by the power supply system. When it is detected that the oscillation of the power supply system exceeds the preset threshold range, each distributed generation is numbered in ascending order of impedance from the distributed generations to the point of common coupling, the active power compensation control proportion of each distributed generation is obtained based on a number of each distributed generation and N, and each distributed generation is controlled, based on the active power compensation control proportion, to output the active power.

In another possible design, an active power compensation control proportion $\varepsilon_{p(k)}$ of a distributed generation numbered k in the N distributed generations satisfies:

$$\varepsilon_{p(k)} = \frac{1}{N} - (k - \frac{N}{2})G_{reg\_p};$$

and

active power $P_{ref(k)}$ output by the distributed generation numbered k in the N distributed generations satisfies:

$$P_{ref(k)} = P_{all}\varepsilon_{p(k)} + (SOC_{ave} - SOC_k)G_{pi\_soc}$$

Herein, k is an integer greater than or equal to 1 and less than or equal to N, $G_{reg\_p} = K_{p\_p} + \dfrac{K_{p\_i}}{s}$, $K_{p\_p}$ is a first proportional coefficient, $K_{p\_i}$ is a first integral coefficient, s is a Laplace operator, $P_{all}$ is the total active power output by the power supply system, $SOC_{ave}$ is an average value of states of charge SOCs of the N distributed generations, $SOC_k$ is an SOC of the distributed generation numbered k, and $G_{pi\_soc}$ is a transfer function.

In another possible design, the power compensation control proportion includes a reactive power compensation control proportion, and the reactive power compensation control proportion is a proportion of the reactive power output by each distributed generation to the total reactive power output by the power supply system. When it is detected that the oscillation of the power supply system exceeds the preset threshold range, each distributed generation is numbered in ascending order of impedance from the distributed generations to the point of common coupling, the reactive power compensation control proportion of each distributed generation is obtained based on a number of each distributed generation and N, and each distributed generation is controlled, based on the reactive power compensation control proportion, to output the reactive power.

In another possible design, a reactive power compensation control proportion $\varepsilon_{q(k)}$ of a distributed generation numbered k in the N distributed generations satisfies:

$$\varepsilon_{q(k)} = \frac{1}{N} + (k - \frac{N}{2})G_{reg\_q} \ ;$$

and

reactive power $Q_{ref(k)}$ output by the distributed generation numbered k in the N distributed generations satisfies:

$$Q_{ref(k)} = Q_{all}\varepsilon_{q(k)}$$

Herein, k is an integer greater than or equal to 1 and less than or equal to N, $G_{reg\_q} = K_{q\_p} + \dfrac{K_{q\_i}}{s}$, $K_{q\_p}$ is a second proportional coefficient, $K_{q\_i}$ is a second integral coefficient, s is a Laplace operator, and $Q_{all}$ is the total reactive power output by the power supply system.

In the foregoing, a distributed generation is numbered in the ascending order of the impedance from the distributed generations to the point of common coupling. Smaller impedance from the distributed generation to the point of common coupling indicates a smaller number of the distributed generation, a larger active power compensation control proportion $\varepsilon_{p(k)}$, and a smaller reactive power compensation control proportion $\varepsilon_{q(k)}$. Therefore, higher active power output by the distributed generation indicates lower reactive power output by the distributed generation. Alternatively, larger impedance from the distributed generation to the point of common coupling indicates a larger number of the distributed generation, a smaller active power compensation control proportion $\varepsilon_{p(k)}$, and a larger reactive power compensation control proportion $\varepsilon_{q(k)}$. Therefore, lower active power output by the distributed generation indicates higher reactive power output by the distributed generation. The active power and the reactive power that are output by each distributed generation are dynamically adjusted, so that the oscillation of the power supply system is suppressed, and the power supply system is ensured to resume the normal and stable operation.

In another possible design, a current and a voltage of the point of common coupling of the power supply system are collected, and an effective value of an oscillation component of the voltage, an effective value of an oscillation component of the current, and an effective value of an oscillation component of a system frequency are obtained based on the voltage and the current of the point of common coupling. When the effective value of the oscillation component of the voltage is greater than a third threshold, the effective value of the oscillation component of the current is greater than a fourth threshold, and/or the effective value of the oscillation component of the system frequency is greater than a fifth threshold, it is learned that the oscillation of the power supply system exceeds the preset threshold range. The current and the voltage of the point of common coupling are collected, so that whether the oscillation of the power supply system exceeds the preset threshold range is detected, to ensure accuracy of detecting that the oscillation of the power supply system occurs. In this way, when it is detected that the oscillation of the power supply system exceeds the preset threshold range, the reactive power output by the distributed generation is adjusted, so that the oscillation of the power supply system is suppressed, and the power supply system is ensured to resume the normal and stable operation.

According to a third aspect, this application provides a power supply system. The power supply system includes a photovoltaic array and the detection control unit that is connected to the photovoltaic array and that is provided in any one of the first aspect or the possible implementations of the first aspect. The photovoltaic array is configured to supply power to a power grid by using converted electric energy. In the detection control unit, a voltage and a current of a point of common coupling are detected, and whether oscillation of the power supply system exceeds a preset threshold range is detected. In this way, when it is detected that the oscillation of the power supply system exceeds the preset threshold range, a power compensation control proportion of each distributed generation is adjusted based on impedance from each distributed generation to the point of common coupling of the power supply system, so that a power output proportion of each distributed generation is controlled based on an adjusted power compensation control proportion. In this way, the oscillation of the power supply system is suppressed, and normal and stable operation of the power supply system is ensured. In addition, low implementation complexity and low implementation costs can be achieved without changing an original control circuit or adding an additional device.

**BRIEF DESCRIPTION OF DRAWINGS**

To describe technical solutions in embodiments of this application or in the background more clearly, the following describes the accompanying drawings for describing embodiments of this application or the background.

FIG. 1 is a schematic of an application scenario of a power supply system according to this application;
FIG. 2 is a schematic of another application scenario of a power supply system according to this application;
FIG. 3 is a schematic of a structure of a radiation wiring manner of a power supply system according to this application;
FIG. 4 is a schematic of a structure of a T-shaped wiring manner of a power supply system according to this application;
FIG. 5 is a schematic of a structure of a power supply system according to this application; and
FIG. 6 is a schematic flowchart of a power control method for a power supply system according to this application.

**DESCRIPTION OF EMBODIMENTS**

The following describes embodiments of this application with reference to the accompanying drawings in embodiments of this application.

The power supply system provided in this application may be applicable to a new energy station. Based on different types of new energy stations, the power supply system may be classified into a plurality of application fields such as a new energy smart microgrid field, a power transmission and distribution field, a new energy field (for example, a photovoltaic grid connection field or a wind power grid connection field), a photovoltaic storage power generation field (for example, supplying power to a household device (for example, a refrigerator or an air conditioner) or a power grid), a wind storage power generation field, or a high-power converter field (for example, converting a direct current into a high-power high-voltage alternating current). This may be specifically determined based on an actual application scenario, and is not limited herein. The power supply system provided in this application may be applied to different application scenarios, for example, an application scenario of photovoltaic storage power supply, an application scenario of wind storage power supply, an application scenario of pure energy storage power supply, or another application scenario. The following uses the application scenario of energy storage power supply as an example for description. Details are not described below again.

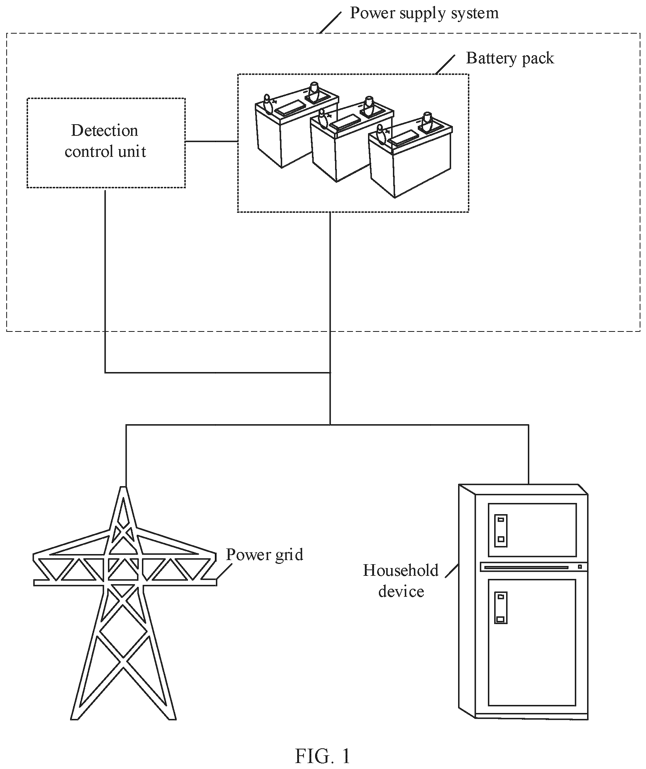

FIG. 1 is a schematic of an application scenario of a power supply system according to this application. In an application scenario of pure energy storage power supply, as shown in FIG. 1, the power supply system includes a battery pack and a detection control unit. In a process in which the battery pack supplies power to a load, the detection control unit may detect a voltage and a current of a point of common coupling of the power supply system, and control, based on the detected voltage and current, the battery pack to supply power to the load such as a communication base station or a household device in a power grid. The detection control unit may be a new energy station controller, including a new energy power generation station controller, an energy storage station controller, a microelectric controller, an active power distribution network controller, or the like.

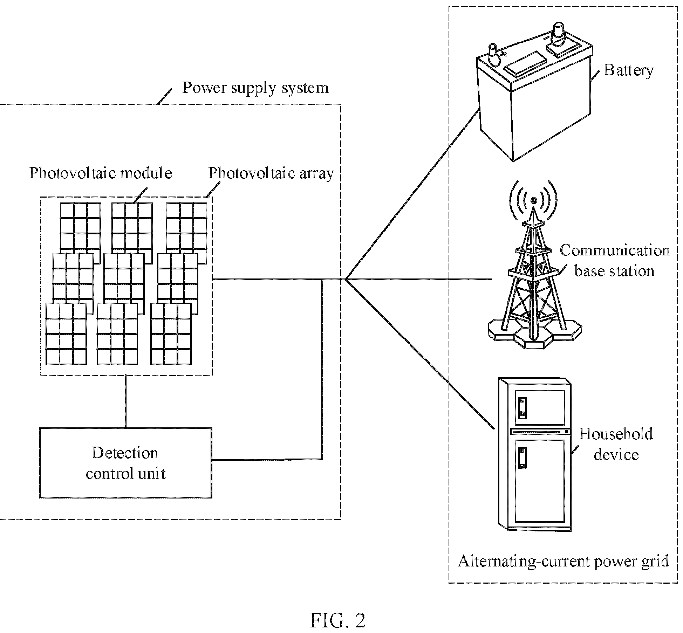

FIG. 2 is a schematic of another application scenario of a power supply system according to this application. In an application scenario of a photovoltaic system, an output end of a photovoltaic array may be connected to a power grid. A detection control unit may detect a voltage and a current of a point of common coupling of the power supply system, and control, based on the detected voltage and current, the photovoltaic array to supply power to an electric device such as a battery, a communication base station, or a household device in the power grid. In the photovoltaic system shown in FIG. 2, the photovoltaic array may be a photovoltaic module group. One photovoltaic module group may include one or more photovoltaic strings connected in parallel, and one photovoltaic string may be obtained by connecting one or more photovoltaic modules in series. The photovoltaic module herein may be a solar panel, a photovoltaic panel, or an energy storage battery. In other words, in the photovoltaic system shown in FIG. 2, one photovoltaic string may be one photovoltaic string column obtained by connecting one or more solar panels, one or more photovoltaic panels, or one or more energy storage batteries in series, and output currents of a plurality of photovoltaic string column are used by the electric device such as the battery, the communication base station, or the household device in the power grid.

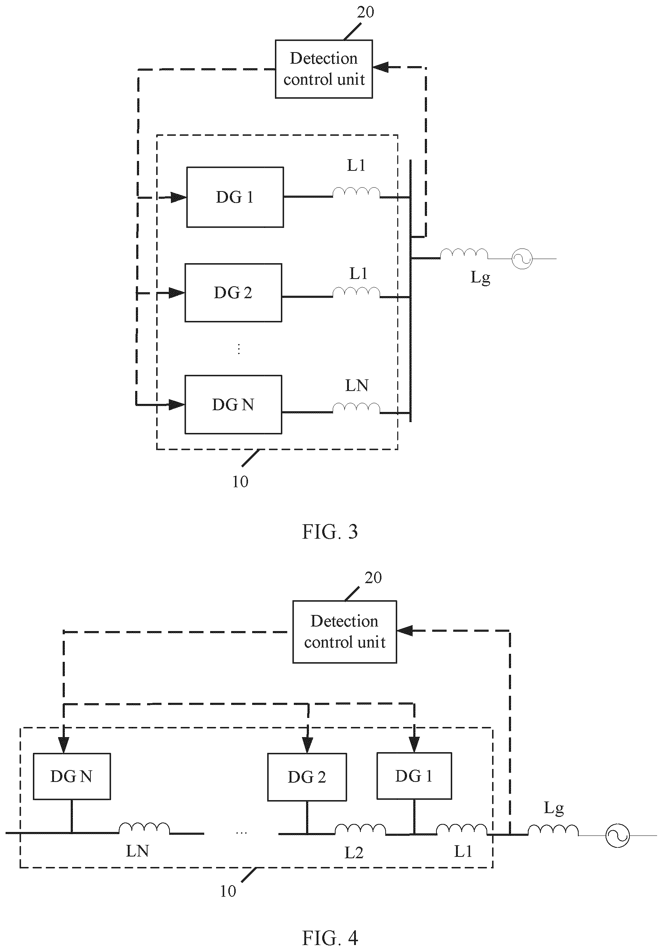

With reference to FIG. 3 and FIG. 4, the following describes, by using an example, a power supply system provided in this application and an operation principle of the power supply system. In embodiments of this application, "and/or" indicates one, or may indicate some or all. For example, a $DG_1$, a $DG_2$, and/or a $DG_3$ may indicate any one of the $DG_1$, the $DG_2$, and the $DG_3$, or may indicate any two of the $DG_1$, the $DG_2$, and the $DG_3$, or may indicate the $DG_1$, the $DG_2$, and the $DG_3$.

Wiring manners of distributed generations (distributed generations, DGs) in the power supply system may be classified into a radiation wiring manner and a T-shaped wiring manner. As shown in FIG. 3, FIG. 3 is a schematic of a structure of the radiation wiring manner of the power supply system according to this application. The power supply system includes N DGs ($DG_1$, $DG_2$, ..., and $DG_N$) 10 and at least one detection control unit 20. N DGs are connected in parallel and then connected to a power grid. One detection control unit 20 is used as an example. One end of the detection control unit 20 is connected to a point of common coupling of the power supply system, and the other end of the detection control unit 20 is connected to a control end of each DG. Impedance exists between each DG and the point of common coupling of the power supply system. Impedance from the $DG_1$ to the point of common coupling is $L_1$, impedance from the $DG_2$ to the point of common coupling is $L_2$, ..., and impedance from the $DG_N$ to the point of common coupling is $L_N$. N is an integer greater than or equal to 1.

As shown in FIG. 4, FIG. 4 is a schematic of a structure of the T-shaped wiring manner of the power supply system according to this application. The power supply system includes N DGs ($DG_1$, $DG_2$, ..., and $DG_N$) 10 and at least one detection control unit 20. Impedance exists between every two adjacent DGs. Impedance between the $DG_1$ and a point of common coupling is $L_1$, impedance between the $DG_1$ and the $DG_2$ is $L_2$, ..., and impedance between the $DG_N$ and the $DG_{N-1}$ is $L_N$. $L_1$ and the $DG_1$ may form a DG unit 1, $L_2$ and the $DG_2$ may form a DG unit 2, ..., and $L_N$ and the $DG_N$ may form a DG unit N. N DG units are connected in series and then connected to a power grid. One detection control unit 20 is used as an example. One end of the detection control unit 20 is connected to the point of common coupling of the power supply system, and the other end of the detection control unit 20 is connected to a control end of each DG. The impedance may include resistance, inductive reactance, and capacitive reactance, and has obstruction effect on an alternating current.

The detection control unit 20 may include a plurality of logic components, for example, a proportional integral controller, a second-order general integrator phase locked loop (second-order general Integrator phase locked loop, SOGI-PLL), a threshold comparator, a high-frequency filter, a compensator, a root mean square (root meam square, RMS) detector, and an equalization control loop regulator. The detection control unit is configured to: detect a voltage and a current of the point of common coupling of the power supply system, and control, based on the detected voltage and current, each DG to output active power and reactive power to the power grid.

The detection control unit 20 is configured to obtain a power compensation control proportion $\dfrac{1}{N}$ of each distributed generation when it is detected that the power supply system operates normally and stably. The power compensation control proportion is a proportion of power output by each distributed generation to total power output by the power supply system. Power output proportion of each distributed generation is controlled based on the power compensation control proportion $\dfrac{1}{N}$. Each distributed generation is controlled, in a state of charge (state of charge, SOC) equalization control manner, to output active power and reactive power, so that an SOC of each distributed generation is maintained at an average value of SOCs of the N distributed generations. That the system operates normally and stably may indicate that the power supply system does not oscillate, or that oscillation of the power supply system does not exceed a preset threshold range. Specific implementations are as follows.

In a possible implementation, the detection control unit 20 is further configured to: when it is detected that the system operates normally and stably, obtain an active power compensation control proportion $\dfrac{1}{N}$ of each distributed generation, and control each distributed generation to output active power

$$P_{ref(k)} = P_{all}\frac{1}{N} + (SOC_{ave} - SOC_k)G_{pi\_soc}$$

. $P_{ref(k)}$ is active power output by a distributed generation numbered k in the N distributed generations, $P_{all}$ is total active power output by the power supply system, $SOC_{ave}$ is the average value of the SOCs of the N distributed generations, $SOC_k$ is an SOC of the distributed generation numbered k, $G_{pi\_soc}$ is a transfer function, and the transfer function may be a transfer function of the equalization control loop regulator.

In another possible implementation, the detection control unit 20 is further configured to: when it is detected that the system operates normally and stably, obtain a reactive power compensation control proportion $\dfrac{1}{N}$ of each distributed generation, and control each distributed generation to output active power

$$Q_{ref(k)} = Q_{all}\frac{1}{N}$$

. $Q_{ref(k)}$ is reactive power output by a distributed generation numbered k in the N distributed generations, and $Q_{all}$ is total reactive power output by the power supply system.

In addition, the detection control unit 20 is configured to: when it is detected that the oscillation of the power supply system exceeds the preset threshold range, obtain a power compensation control proportion of each distributed generation based on the impedance from each distributed generation to the point of common coupling of the power supply system. The power compensation control proportion is a proportion of power output by each distributed generation to total power output by the power supply system. As shown in FIG. 3, the impedance from the $DG_1$ to the point of common coupling is $L_1$, the impedance from the $DG_2$ to the point of common coupling is $L_2$, ..., and the impedance from the $DG_N$ to the point of common coupling is $L_N$. As shown in FIG. 4, the impedance from the $DG_1$ to the point of common coupling is $L_1$, impedance from the $DG_2$ to the point of common coupling is $L_1+L_2$, ..., and impedance from the $DG_N$ to the point of common coupling is $L_1+L_2+...+L_N$. Because impedance from the N DGs to the point of common coupling is different, power compensation control proportions of the N DGs are also different. The detection control unit 20 is further configured to control a power output proportion of each distributed generation based on the power compensation control proportion, to suppress the oscillation of the power supply system, and ensure that the power supply system resumes normal and stable operation. In addition, low implementation complexity and low implementation costs can be achieved without changing an original control circuit or adding an additional device. Specific implementations are as follows.

In a possible implementation, the detection control unit 20 is further configured to: when impedance from a first distributed generation in the N distributed generations to the point of common coupling is greater than a first threshold, control active power output by the first distributed generation to be less than first preset power; or when impedance from a first distributed generation to the point of common coupling is less than or equal to a first threshold, control active power output by the first distributed generation to be greater than or equal to first preset power. The first distributed generation is any one of the N distributed generations. That is, larger impedance from any one of the N distributed generations to the point of common coupling indicates lower active power output by the distributed generation, and smaller impedance from any one of the N distributed generations to the point of common coupling indicates higher active power output by the distributed generation. Active power output by each distributed generation is adjusted, so that the oscillation of the power supply system is suppressed, and the power supply system is ensured to resume the normal and stable operation.

In another possible implementation, the detection control unit 20 is further configured to: when impedance from a second distributed generation in the N distributed generations to the point of common coupling is greater than a second threshold, control reactive power output by the second distributed generation to be greater than second preset power; or when impedance from a second distributed generation to the point of common coupling is less than or equal to a second threshold, control reactive power output by the second distributed generation to be less than or equal to second preset power. The second distributed generation is any one of the N distributed generations. That is, larger impedance from any one of the N distributed generations to the point of common coupling indicates higher reactive power output by the distributed generation, and smaller impedance from any one of the N distributed generations to the point of common coupling indicates lower reactive power output by the distributed generation. Reactive power output by the distributed generation is adjusted, so that the oscillation of the power supply system is suppressed, and the power supply system is ensured to resume the normal and stable operation.

In another possible implementation, the detection control unit 20 is further configured to: when it is detected that the oscillation of the power supply system exceeds the preset threshold range, control a sum of active power output by the N distributed generations to be equal to total active power output by the power supply system before the oscillation of the power supply system exceeds the preset threshold range; and control a sum of reactive power output by the N distributed generations to be equal to total reactive power output by the power supply system before the oscillation of the power supply system exceeds the preset threshold range. That is, on the premise that the total active power and the total reactive power that are output by the power supply system are not changed, the active power and the reactive power that are output by each distributed generation are adjusted, so that the oscillation of the power supply system is suppressed, and the power supply system is ensured to resume the normal and stable operation.

In another possible implementation, the power compensation control proportion includes an active power compensation control proportion, and the active power compensation control proportion is a proportion of the active power output by each distributed generation to the total active power output by the power supply system. The detection control unit 20 is further configured to: when it is detected that the oscillation of the power supply system exceeds the preset threshold range, number each distributed generation in ascending order of impedance from distributed generations to the point of common coupling, obtain the active power compensation control proportion of each distributed generation based on a number of each distributed generation and N, and control, based on the active power compensation control proportion, each distributed generation to output the active power.

For example, as shown in FIG. 3, the impedance from the $DG_1$ to the point of common coupling is $L_1$, the impedance from the $DG_2$ to the point of common coupling is $L_2$, ..., and the impedance from the $DG_N$ to the point of common coupling is $L_N$, where $L_1<L_2<L_3<...<L_N$. Therefore, the N DGs are numbered sequentially in ascending order of impedance from the DGs to the point of common coupling. A number of the $DG_1$ is 1, a number of the $DG_2$ is 2, ..., and a number of the $DG_N$ is N. As shown in FIG. 4, the impedance from the $DG_1$ to the point of common coupling is $L_1$, the impedance from the $DG_2$ to the point of common coupling is $L_1+L_2$, ..., and the impedance from the $DG_N$ to the point of common coupling is $L_1+L_2+...+L_N$, where $L_1<L_1+L_2<L_1+L_2+L_3<...<L_1+L_2+L_3+...+L_N$. Therefore, the N DGs are numbered sequentially in ascending order of impedance from the DGs to the point of common coupling. A number of the $DG_1$ is 1, a number of

the DG$_2$ is 2, ..., and a number of the DG$_N$ is N.

An active power compensation control proportion $\varepsilon_{p(k)}$ of a distributed generation numbered k in the N distributed generations satisfies:

$$\varepsilon_{p(k)} = \frac{1}{N} - (k - \frac{N}{2})G_{reg\_p};$$

and

active power $P_{ref(k)}$ output by the distributed generation numbered k in the N distributed generations satisfies:

$$P_{ref(k)} = P_{all}\varepsilon_{p(k)} + (SOC_{ave} - SOC_k)G_{pi\_soc}$$

$$G_{reg\_p} = K_{p\_p} + \frac{K_{p\_i}}{s}$$

Herein, k is an integer greater than or equal to 1 and less than or equal to N, $K_{p\_p}$ is a first proportional coefficient, $K_{p\_i}$ is a first integral coefficient, s is a Laplace operator, $P_{all}$ is the total active power output by the power supply system, $SOC_{ave}$ is an average value of SOCs of the N distributed generations, $SOC_k$ is an SOC of the distributed generation numbered k, and $G_{pi\_soc}$ is a transfer function. The first proportional coefficient may be a proportional coefficient of the proportional integral controller, the first integral coefficient may be an integral coefficient of the proportional integral controller, and the transfer function is a transfer function of the equalization control loop regulator.

In another possible implementation, the power compensation control proportion includes a reactive power compensation control proportion, and the reactive power compensation control proportion is a proportion of the reactive power output by each distributed generation to the total reactive power output by the power supply system. The detection control unit 20 is further configured to: when it is detected that the oscillation of the power supply system exceeds the preset threshold range, number each distributed generation in ascending order of impedance from the distributed generations to the point of common coupling, obtain the reactive power compensation control proportion of each distributed generation based on a number of each distributed generation and N, and control, based on the reactive power compensation control proportion, each distributed generation to output the reactive power.

For example, as shown in FIG. 3, the impedance from the DG$_1$ to the point of common coupling is L$_1$, the impedance from the DG$_2$ to the point of common coupling is L$_2$, ..., and the impedance from the DG$_N$ to the point of common coupling is L$_N$, where L$_1$<L$_2$<L$_3$<...<L$_N$. Therefore, the N DGs are numbered sequentially in ascending order of impedance from the DGs to the point of common coupling. A number of the DG$_1$ is 1, a number of the DG$_2$ is 2, ..., and a number of the DG$_N$ is N. As shown in FIG. 4, the impedance from the DG$_1$ to the point of common coupling is L$_1$, the impedance from the DG$_2$ to the point of common coupling is L$_1$+L$_2$, ..., and the impedance from the DG$_N$ to the point of common coupling is L$_1$+L$_2$+...+L$_N$, where L$_1$<L$_1$+L$_2$<L$_1$+L$_2$+L$_3$<...<L$_1$+L$_2$+L$_3$+...+L$_N$. Therefore, the N DGs are numbered sequentially in ascending order of impedance from the DGs to the point of common coupling. A number of the DG$_1$ is 1, a number of the DG$_2$ is 2, ..., and a number of the DG$_N$ is N.

A reactive power compensation control proportion $\varepsilon_{q(k)}$ of a distributed generation numbered k in the N distributed generations satisfies:

$$\varepsilon_{q(k)} = \frac{1}{N} + (k - \frac{N}{2})G_{reg\_q};$$

and

reactive power $Q_{ref(k)}$ output by the distributed generation numbered k in the N distributed generations satisfies:

$$Q_{ref(k)} = Q_{all}\varepsilon_{q(k)}$$

Herein, k is an integer greater than or equal to 1 and less than or equal to N, N is a total quantity of distributed generations, $G_{reg\_q} = K_{q\_p} + \frac{K_{q\_i}}{s}$, $K_{q\_p}$ is a second proportional coefficient, $K_{q\_i}$ is a second integral coefficient, s is a Laplace operator, and $Q_{all}$ is the total reactive power output by the power supply system. The second proportional coefficient may be a proportional coefficient of the proportional integral controller, and the second integral coefficient may be an integral coefficient of the proportional integral controller.

In conclusion, a distributed generation is numbered in the ascending order of the impedance from the distributed generations to the point of common coupling. Smaller impedance from the distributed generation to the point of common coupling indicates a smaller number of the distributed generation, a larger active power compensation control proportion $\varepsilon_{p(k)}$, and a smaller reactive power compensation control proportion $\varepsilon_{q(k)}$. Therefore, higher active power output by the distributed generation indicates lower reactive power output by the distributed generation. Alternatively, larger impedance from the distributed generation to the point of common coupling indicates a larger number of the distributed generation, a smaller active power compensation control proportion $\varepsilon_{p(k)}$, and a larger reactive power compensation control proportion $\varepsilon_{q(k)}$. Therefore, lower active power output by the distributed generation indicates higher reactive power output by the distributed generation. The active power and the reactive power that are output by each distributed generation are dynamically adjusted, so that the oscillation of the power supply system is suppressed, and the power supply system is ensured to resume the normal and stable operation.

Certainly, in this embodiment of this application, a distributed generation may alternatively be numbered in descending order of the impedance from the distributed generation to the point of common coupling. Smaller impedance from the distributed generation to the point of common coupling indicates a larger number of the distributed generation, a larger active power compensation control proportion $\varepsilon_{p(k)}$, and a smaller reactive power compensation control proportion $\varepsilon_{q(k)}$. Therefore, higher active power output by the distributed generation indicates lower reactive power output by the distributed generation. Larger impedance from the distributed generation to the point of common coupling indicates a larger number of the distributed generation, a smaller active power compensation control proportion $\varepsilon_{p(k)}$, and a larger reactive power compensation control proportion $\varepsilon_{q(k)}$. Therefore, lower active power output by the distributed generation indicates higher reactive power output by the distributed generation.

It should be noted that formulas for calculating the active power compensation control proportion $\varepsilon_{p(k)}$ and the reactive power compensation control proportion $\varepsilon_{q(k)}$ are not limited to the foregoing formulas. A formula that satisfies a case in which larger impedance from a distributed generation to the point of common coupling indicates a smaller active power compensation control proportion $\varepsilon_{p(k)}$ and a larger reactive power compensation control proportion $\varepsilon_{p(k)}$, or a formula that satisfies a case in which smaller impedance from a distributed generation to the point of common coupling indicates a larger active power compensation control proportion $\varepsilon_{p(k)}$ and a smaller reactive power compensation control proportion $\varepsilon_{p(k)}$ all falls within the protection scope of this application.

In another possible implementation, the detection control unit 20 is further configured to: collect the current and the voltage of the point of common coupling of the power supply system, and obtain an effective value of an oscillation component of the voltage, an effective value of an oscillation component of the current, and an effective value of an oscillation component of a system frequency based on the voltage and the current of the point of common coupling; and when the effective value of the oscillation component of the voltage is greater than a third threshold, the effective value of the oscillation component of the current is greater than a fourth threshold, and/or the effective value of the oscillation component of the system frequency is greater than a fifth threshold, learn that the oscillation of the power supply system exceeds the preset threshold range. When the effective value of the oscillation component of the voltage is not greater than a third threshold, the effective value of the oscillation component of the current is not greater than a fourth threshold, and the effective value of the oscillation component of the system frequency is not greater than a fifth threshold, it is learned that the power supply system operates normally and stably. The effective value of the oscillation component of the voltage may be an RMS value of the oscillation component of the voltage, the effective value of the oscillation component of the current may be an RMS value of the oscillation component of the current, and the effective value of the oscillation component of the system frequency may be an RMS value of the oscillation component of the system frequency.

For example, the detection control unit 20 may collect a voltage $V_{pcc}$ and a current $I_{pcc}$ of the point of common coupling, extract a phase $\theta_g$ of the voltage $V_{pcc}$, calculate a system frequency $\omega_g$ and generate a dq rotating coordinate system, calculate a $V_{pcc}$ component and an $I_{pcc}$ component in the rotating coordinate system through Park (park) transformation, separately perform squaring and root extraction on the $V_{pcc}$ component and the $I_{pcc}$ component, to obtain a voltage amplitude $E_m$ and a current amplitude $I_m$, then separately process the phase $\theta_g$, the voltage amplitude $E_m$, and the current amplitude $I_m$ by using a high-pass filter to obtain an oscillation component of the voltage, an oscillation component of the current, and an oscillation component of the system frequency, and separately calculate an RMS value of the oscillation component of the voltage, an RMS value of the oscillation component of the current, and an RMS value of the oscillation component of the system frequency that are respectively denoted as $E_{m,ripple}$, $I_{m,ripple}$, and $\omega_{g,ripple}$. $E_{m,ripple}$ corresponds to a threshold $E_{m,ripple\_threshold}$, $I_{m,ripple}$ corresponds to a threshold $I_{m,ripple\_threshold}$, and $\omega_{g,ripple}$ corresponds to a threshold $\omega_{g,ripple\_threshold}$. $E_{m,ripple}$, $I_{m,ripple}$, and $\omega_{g,ripple}$ are respectively compared with corresponding thresholds. When any one of $E_{m,ripple}$, $I_{m,ripple}$, and $\omega_{g,ripple}$ exceeds the corresponding threshold, it is determined that the oscillation of the power supply system exceeds the preset threshold range. When none of $E_{m,ripple}$, $I_{m,ripple}$, and $\omega_{g,ripple}$ exceeds the corresponding threshold, it is determined that the power supply system operates normally and stably. When it is determined that the oscillation of the power supply system exceeds the preset threshold range, the threshold comparator may output $Flag_{emg}=1$, adjust a power compensation control proportion of each distributed generation based on the impedance from each distributed generation to the point of common coupling of the power supply system, and control, based on the adjusted power compensation control proportion, the distributed generation to output the active power and the reactive power. When the power supply system operates normally and stably, the threshold comparator may output $Flag_{emg}=0$, and control, in an SOC equalization control manner, each distributed generation to output active power and reactive power.

It should be noted that, after the active power and the reactive power that are output by each distributed generation are adjusted, to suppress the oscillation of the power supply system, and ensure that the power supply system resumes the normal and stable operation, an integrator of the compensator in the detection control unit 20 may be cleared, to ensure that when it is detected that oscillation of the power supply system exceeds the preset threshold range next time, the compensator may keep starting slowly, thereby implementing continuous power control.

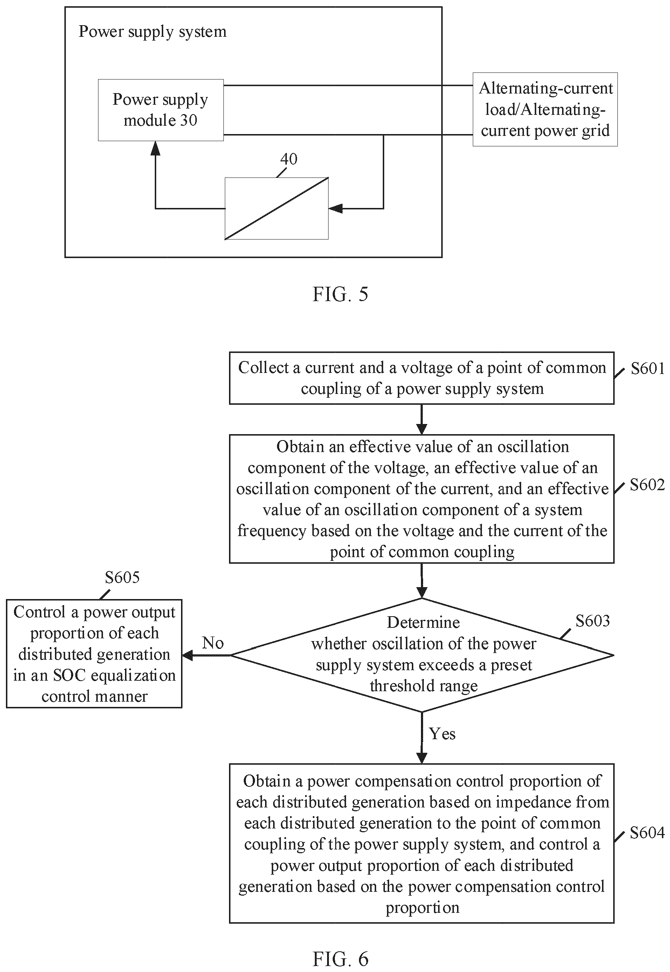

Refer to FIG. 5. FIG. 5 is a schematic of a structure of a power supply system according to this application. As shown in FIG. 5, the power supply system includes a power supply module 30 and a detection control unit 40. The power supply module 30 may include N distributed generations, and an input end of the detection control unit 40 may be connected to a point of common coupling of the power supply module 30. In an application scenario of pure energy storage power supply, the power supply module 30 may include a plurality of battery packs connected in series and in parallel, and one battery pack may include one or more battery units (a voltage of the battery unit is usually between 2.5 V and 4.2 V) connected in series and in parallel, to form a minimum energy storage and management unit. Optionally, the power supply module may alternatively be a power generation component, and the power generation component may include but is not limited to a solar power generation component, a wind power generation component, a hydrogen power generation component, and a diesel generator power generation component. In a photovoltaic storage hybrid power supply scenario, the power supply module 30 is a photovoltaic array. The photovoltaic array may include a plurality of photovoltaic strings connected in series and in parallel, and one photovoltaic string may include a plurality of photovoltaic modules (which may also be referred to as solar panels or photovoltaic panels). The detection control unit 40 may detect a current and a voltage of the point of common coupling of the power supply module 30, and determine, based on the detected current and voltage of the point of common coupling of the power supply module 30, that oscillation of the power supply system exceeds a preset threshold range. When it is detected that the oscillation of the power supply system exceeds the preset threshold range, a power compensation control proportion of each distributed generation is obtained based on impedance from each distributed generation to the point of common coupling of the power supply system, and a power output proportion of each distributed generation is controlled based on the power compensation control proportion. In this way, the oscillation of the power supply system is suppressed, and the power supply system is ensured to resume normal and stable operation.

As shown in FIG. 6, FIG. 6 is a schematic flowchart of a power control method for a power supply system according to this application. The method is applicable to at least one detection control unit in the power supply system, the power supply system further includes N distributed generations, the N distributed generations are connected in parallel or in series and then connected to a power grid, and N is an integer greater than 1.

S601: Collect a current and a voltage of a point of common coupling of the power supply system.

In a possible implementation, the current and the voltage of the point of common coupling of the power supply system may be collected in real time.

In another possible implementation, the current and the voltage of the point of common coupling of the power supply system may alternatively be collected based on a preset sampling period.

In another possible implementation, an input instruction of a user may be received, and the current and the voltage of the point of common coupling of the power supply system are collected based on the input instruction.

S602: Obtain an effective value of an oscillation component of the voltage, an effective value of an oscillation component of the current, and an effective value of an oscillation component of a system frequency based on the voltage and the current of the point of common coupling.

Specifically, a voltage $V_{pcc}$ and a current $I_{pcc}$ of the point of common coupling may be collected, a phase $\theta_g$ of the voltage $V_{pcc}$ may be extracted, a system frequency $\omega_g$ may be calculated and a dq rotating coordinate system may be generated, a $V_{pcc}$ component and an $I_{pcc}$ component in the rotating coordinate system may be calculated through Park (park) transformation, and squaring and root extraction are separately performed on the $V_{pcc}$ component and the $I_{pcc}$ component, to obtain a voltage amplitude $E_m$ and a current amplitude $I_m$. Then, the phase $\theta_g$, the voltage amplitude $E_m$, and the current amplitude $I_m$ are separately processed by using a high-pass filter, to obtain an oscillation component of the voltage, an oscillation component of the current, and an oscillation component of the system frequency, and an RMS value of the oscillation component of the voltage, an RMS value of the oscillation component of the current, and an RMS value of the oscillation component of the system frequency are separately calculated and are respectively denoted as $E_{m,ripple}$, $I_{m,ripple}$, and $\omega_{g,ripple}$. The effective value of the oscillation component of the voltage may be the RMS value of the oscillation component of the voltage, the effective value of the oscillation component of the current may be the RMS value of the oscillation component of the current, and the effective value of the oscillation component of the system frequency may be the RMS value of the oscillation component of the system frequency.

S603: Determine whether oscillation of the power supply system exceeds a preset threshold range. If the oscillation of the power supply system exceeds the preset threshold range, S604 is performed. If the power supply system operates normally and stably, S605 is performed.

Specifically, when the effective value of the oscillation component of the voltage is greater than a third threshold, the effective value of the oscillation component of the current is greater than a fourth threshold, and/or the effective value of the oscillation component of the system frequency is greater than a fifth threshold, it is learned that the oscillation of the power supply system exceeds the preset threshold range. When the effective value of the oscillation component of the voltage is not greater than a third threshold, the effective value of the oscillation component of the current is not greater than a fourth threshold, and the effective value of the oscillation component of the system frequency is not greater than a fifth threshold, it is learned that the power supply system operates normally and stably.

For example, $E_{m,ripple}$ corresponds to a threshold $E_{m,ripple\_threshold}$, $I_{m,ripple}$ corresponds to a threshold $I_{m,ripple\_threshold}$, and $\omega_{g,ripple}$ corresponds to a threshold $\omega_{g,ripple\_threshold}$. $E_{m,ripple}$, $I_{m,ripple}$, and $\omega_{g,ripple}$ are respectively compared with corresponding thresholds. When any one of $E_{m,ripple}$, $I_{m,ripple}$, and $\omega_{g,ripple}$ exceeds the corresponding threshold, it is determined that the oscillation of the power supply system exceeds the preset threshold range. When none of $E_{m,ripple}$, $I_{m,ripple}$, and $\omega_{g,ripple}$ exceeds the corresponding threshold, it is determined that the power supply system operates normally and stably.

S604: Obtain a power compensation control proportion of each distributed generation based on impedance from each distributed generation to the point of common coupling of the power supply system, and control a power output proportion of each distributed generation based on the power compensation control proportion.

In a possible implementation, when impedance from a first distributed generation in the N distributed generations to the point of common coupling is greater than a first threshold, active power output by the first distributed generation is controlled to be less than first preset power. Alternatively, when impedance from a first distributed generation to the point of common coupling is less than or equal to a first threshold, active power output by the first distributed generation is controlled to be greater than or equal to first preset power. The first distributed generation is any one of the N distributed generations. That is, larger impedance from any one of the N distributed generations to the point of common coupling indicates lower active power output by the distributed generation, and smaller impedance from any one of the N distributed generations to the point of common coupling indicates higher active power output by the distributed generation. Active power output by each distributed generation is adjusted, so that the oscillation of the power supply system is suppressed, and the power supply system is ensured to resume normal and stable operation.

In another possible implementation, when impedance from a second distributed generation in the N distributed generations to the point of common coupling is greater than a second threshold, reactive power output by the second distributed generation is controlled to be greater than second preset power. Alternatively, when impedance from a second distributed generation to the point of common coupling is less than or equal to a second threshold, reactive power output by the second distributed generation is controlled to be less than or equal to second preset power. The second distributed generation is any one of the N distributed generations. That is, larger impedance from any one of the N distributed generations to the point of common coupling indicates higher reactive power output by the distributed generation, and smaller impedance from any one of the N distributed generations to the point of common coupling indicates lower reactive power output by the distributed generation. Reactive power output by the distributed generation is adjusted, so that the oscillation of the power supply system is suppressed, and the power supply system is ensured to resume normal and stable operation.

In another possible implementation, when it is detected that the oscillation of the power supply system exceeds the preset threshold range, a sum of active power output by the N distributed generations is controlled to be equal to total active power output by the power supply system before the oscillation of the power supply system exceeds the preset threshold range, and a sum of reactive power output by the N distributed generations is controlled to be equal to total reactive power output by the power supply system before the oscillation of the power supply system exceeds the preset threshold range. That is, on the premise that the total active power and the total reactive power that are output by the power supply system are not changed, the active power and the reactive power that are output by each distributed generation are adjusted, so that the oscillation of the power supply system is suppressed, and the power supply system is ensured to resume the normal and stable operation.

In another possible implementation, the power compensation control proportion includes an active power compensation control proportion, and the active power compensation control proportion is a proportion of the active power output by each distributed generation to the total active power output by the power supply system. When it is detected that the oscillation of the power supply system exceeds the preset threshold range, each distributed generation is numbered in ascending order of impedance from the distributed generations to the point of common coupling, the active power compensation control proportion of each distributed generation is obtained based on a number of each distributed generation and N, and each distributed generation is controlled, based on the active power compensation control proportion, to output the active power.

For example, as shown in FIG. 3, the impedance from the $DG_1$ to the point of common coupling is $L_1$, the

impedance from the $DG_2$ to the point of common coupling is $L_2$, ..., and the impedance from the $DG_N$ to the point of common coupling is $L_N$, where $L_1 < L_2 < L_3 < ... < L_N$. Therefore, the N DGs are numbered sequentially in ascending order of impedance from the DGs to the point of common coupling. A number of the $DG_1$ is 1, a number of the $DG_2$ is 2, ..., and a number of the $DG_N$ is N. As shown in FIG. 4, the impedance from the $DG_1$ to the point of common coupling is $L_1$, the impedance from the $DG_2$ to the point of common coupling is $L_1+L_2$, ..., and the impedance from the $DG_N$ to the point of common coupling is $L_1+L_2+...+L_N$, where $L_1 < L_1+L_2 < L_1+L_2+L_3 < ... < L_1+L_2+L_3+...+L_N$. Therefore, the N DGs are numbered sequentially in ascending order of impedance from the DGs to the point of common coupling. A number of the $DG_1$ is 1, a number of the $DG_2$ is 2, ..., and a number of the $DG_N$ is N.

An active power compensation control proportion $\varepsilon_{p(k)}$ of a distributed generation numbered k in the N distributed generations satisfies:

$$\varepsilon_{p(k)} = \frac{1}{N} - (k - \frac{N}{2})G_{reg\_p};$$

and
active power $P_{ref(k)}$ output by the distributed generation numbered k in the N distributed generations satisfies:

$$P_{ref(k)} = P_{all}\varepsilon_{p(k)} + (SOC_{ave} - SOC_k)G_{pi\_soc}$$

Herein, k is an integer greater than or equal to 1 and less than or equal to N, $G_{reg\_p} = K_{p\_p} + \dfrac{K_{p\_i}}{s}$ , $K_{p\_p}$ is a first proportional coefficient, $K_{p\_i}$ is a first integral coefficient, s is a Laplace operator, $P_{all}$ is the total active power output by the power supply system, $SOC_{ave}$ is an average value of SOCs of the N distributed generations, $SOC_k$ is an SOC of the distributed generation numbered k, and $G_{pi\_soc}$ is a transfer function. The first proportional coefficient may be a proportional coefficient of a proportional integral controller, the first integral coefficient may be an integral coefficient of the proportional integral controller, and the transfer function is a transfer function of an equalization control loop regulator.

In another possible implementation, the power compensation control proportion includes a reactive power compensation control proportion, and the reactive power compensation control proportion is a proportion of the reactive power output by each distributed generation to the total reactive power output by the power supply system. When it is detected that the oscillation of the power supply system exceeds the preset threshold range, each distributed generation is numbered in ascending order of impedance from the distributed generations to the point of common coupling, the reactive power compensation control proportion of each distributed generation is obtained based on a number of each distributed generation and N, and each distributed generation is controlled, based on the reactive power compensation control proportion, to output the reactive power.

For example, as shown in FIG. 3, the impedance from the $DG_1$ to the point of common coupling is $L_1$, the impedance from the $DG_2$ to the point of common coupling is $L_2$, ..., and the impedance from the $DG_N$ to the point of common coupling is $L_N$, where $L_1 < L_2 < L_3 < ... < L_N$. Therefore, the N DGs are numbered sequentially in ascending order of impedance from the DGs to the point of common coupling. A number of the $DG_1$ is 1, a number of the $DG_2$ is 2, ..., and a number of the $DG_N$ is N. As shown in FIG. 4, the impedance from the $DG_1$ to the point of common coupling is $L_1$, the impedance from the $DG_2$ to the point of common coupling is $L_1+L_2$, ..., and the impedance from the $DG_N$ to the point of common coupling is $L_1+L_2+...+L_N$, where $L_1 < L_1+L_2 < L_1+L_2+L_3 < ... < L_1+L_2+L_3+...+L_N$. Therefore, the N DGs are numbered sequentially in ascending order of impedance from the DGs to the point of common coupling. A number of the $DG_1$ is 1, a number of the $DG_2$ is 2, ..., and a number of the $DG_N$ is N.

A reactive power compensation control proportion $\varepsilon_{q(k)}$ of a distributed generation numbered k in the N distributed generations satisfies:

$$\varepsilon_{q(k)} = \frac{1}{N} + (k - \frac{N}{2})G_{reg\_q};$$

and
reactive power $Q_{ref(k)}$ output by the distributed generation numbered k in the N distributed generations satisfies:

$$Q_{ref(k)} = Q_{all}\varepsilon_{q(k)}$$

Herein, k is an integer greater than or equal to 1 and less than or equal to N, N is a total quantity of distributed generations,

$$G_{reg\_q} = K_{q\_p} + \frac{K_{q\_i}}{s}$$

, $K_{q\_p}$ is a second proportional coefficient, $K_{q\_i}$ is a second integral coefficient, s is a Laplace operator, and $Q_{all}$ is the total reactive power output by the power supply system. The second proportional coefficient may be a proportional coefficient of a proportional integral controller, and the second integral coefficient may be an integral coefficient of the proportional integral controller.

It should be noted that formulas for calculating the active power compensation control proportion $\varepsilon_{p(k)}$ and the reactive power compensation control proportion $\varepsilon_{q(k)}$ are not limited to the foregoing formulas. A formula that satisfies a case in which larger impedance from a distributed generation to the point of common coupling indicates a smaller active power compensation control proportion $\varepsilon_{p(k)}$ and a larger reactive power compensation control proportion $\varepsilon_{p(k)}$, or a formula that satisfies a case in which smaller impedance from a distributed generation to the point of common coupling indicates a larger active power compensation control proportion $\varepsilon_{p(k)}$ and a smaller reactive power compensation control proportion $\varepsilon_{p(k)}$ all falls within the protection scope of this application.

S605: Control a power output proportion of each distributed generation in an SOC equalization control manner.

Specifically, when it is detected that the power supply system operates normally and stably, a power compensation control proportion $\dfrac{1}{N}$ of each distributed generation is obtained, where the power compensation control proportion is a proportion of power output by each distributed generation to total power output by the power supply system. Each distributed generation is controlled, based on the power compensation control proportion $\dfrac{1}{N}$, to output active power and reactive power. Each distributed generation is controlled, in the state of charge (state of charge, SOC) equalization control manner, to output the active power and the reactive power, so that an SOC of each distributed generation is maintained at an average value of SOCs of the N distributed generations. That the system operates normally and stably may indicate that the power supply system does not oscillate, or that the oscillation of the power supply system does not exceed the preset threshold range. Specific implementations are as follows.

In a possible implementation, when it is detected that the system operates normally and stably, an active power compensation control proportion $\dfrac{1}{N}$ of each distributed generation is obtained, and each distributed generation is controlled to output active power

$$P_{ref(k)} = P_{all}\frac{1}{N} + (SOC_{ave} - SOC_k)G_{pi\_soc}$$

. $P_{ref(k)}$ is active power output by a distributed generation numbered k in the N distributed generations, $P_{all}$ is total active power output by the power supply system, $SOC_{ave}$ is the average value of the SOCs of the N distributed generations, $SOC_k$ is an SOC of the distributed generation numbered k, $G_{pi\_soc}$ is a transfer function, and the transfer function may be a transfer function of an equalization control loop regulator.

In another possible implementation, when it is detected that the system operates normally and stably, a reactive power compensation control proportion $\dfrac{1}{N}$ of each distributed generation is obtained, and each distributed generation is controlled to output active power

$$Q_{ref(k)} = Q_{all}\frac{1}{N}$$

. $Q_{ref(k)}$ is reactive power output by a distributed generation numbered k in the N distributed generations, and $Q_{all}$ is total reactive power output by the power supply system.

It should be noted that, after each distributed generation is controlled to output the active power and the reactive power, S601 to S605 may continue to be repeatedly performed. Whether the oscillation of the power supply system exceeds the preset threshold range is detected, and each distributed generation is controlled to output active power and reactive power in a different power control manner.

In this embodiment of this application, the current and the voltage of the point of common coupling of the power supply system are detected, to determine whether the oscillation of the power supply system exceeds the preset threshold range. When it is detected that the oscillation of the power supply system exceeds the preset threshold range, the power compensation control proportion of each distributed generation is obtained based on the impedance from each distributed generation to the point of common coupling of the power supply system, and the power output proportion of each distributed generation is controlled based on the power compensation control proportion. In this way, the oscillation of the power supply system is suppressed, and the power supply system is ensured to resume the normal and stable operation.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A power supply system, wherein the power supply system comprises N distributed generations and at least one detection control unit, the N distributed generations are connected in parallel or in series and then connected to a power grid, and N is an integer greater than 1;

   the detection control unit is configured to: when detecting that oscillation of the power supply system exceeds a preset threshold range, obtain a power compensation control proportion of each distributed generation based on impedance from each distributed generation to a point of common coupling of a microgrid of the power supply system, wherein the power compensation control proportion is a proportion of power output by each distributed generation to total power output by the power supply system; and
   the detection control unit is further configured to control a power output proportion of each distributed generation based on the power compensation control proportion.

2. The system according to claim 1, wherein

   the detection control unit is further configured to: when impedance from a first distributed generation in the N distributed generations to the point of common coupling is greater than a first threshold, control active power output by the first distributed generation to be less than first preset power; or
   the detection control unit is further configured to: when impedance from the first distributed generation to the point of common coupling is less than or equal to the first threshold, control active power output by the first distributed generation to be greater than or equal to the first preset power.

3. The system according to claim 1, wherein

   the detection control unit is further configured to: when impedance from a second distributed generation in the N distributed generations to the point of common coupling is greater than a second threshold, control reactive power output by the second distributed generation to be greater than second preset power; or
   the detection control unit is further configured to: when impedance from the second distributed generation to the point of common coupling is less than or equal to the second threshold, control reactive power output by the second distributed generation to be less than or equal to the second preset power.

4. The system according to any one of claims 1 to 3, wherein
   the detection control unit is further configured to: when it is detected that the oscillation of the power supply system exceeds the preset threshold range, control a sum of active power output by the N distributed generations to be equal to total active power output by the power supply system before the oscillation of the power supply system exceeds the preset threshold range; and control a sum of reactive power output by the N distributed generations to be equal to total reactive power output by the power supply system before the oscillation of the power supply system exceeds the preset threshold range.

5. The system according to any one of claims 1 to 4, wherein the power compensation control proportion comprises an active power compensation control proportion, and the active power compensation control proportion is a proportion of active power output by each distributed generation to the total active power output by the power supply system; and
   the detection control unit is further configured to: when it is detected that the oscillation of the power supply system exceeds the preset threshold range, number each distributed generation in ascending order of impedance from the distributed generations to the point of common coupling, obtain the active power compensation control proportion of each distributed generation based on a number of each distributed generation and N, and control, based on the active power compensation control proportion, each distributed generation to output the active power.

6. The system according to claim 5, wherein the active power compensation control proportion $\varepsilon_{p(k)}$ of a distributed generation numbered k in the N distributed generations satisfies:

$$\varepsilon_{p(k)} = \frac{1}{N} - (k - \frac{N}{2})G_{reg\_p} ;$$

and

the active power $P_{ref(k)}$ output by the distributed generation numbered k in the N distributed generations satisfies:

$$P_{ref(k)} = P_{all}\varepsilon_{p(k)} + (SOC_{ave} - SOC_k)G_{pi\_soc} ,$$

wherein

k is an integer greater than or equal to 1 and less than or equal to N, $\quad G_{reg\_p} = K_{p\_p} + \dfrac{K_{p\_i}}{s}$ , $K_{p\_p}$ is a first proportional coefficient, $K_{p\_i}$ is a first integral coefficient, s is a Laplace operator, $P_{all}$ is the total active power output by the power supply system, $SOC_{ave}$ is an average value of states of charge SOCs of the N distributed generations, $SOC_k$ is an SOC of the distributed generation numbered k, and $G_{pi\_soc}$ is a transfer function.

7. The system according to any one of claims 1 to 4, wherein the power compensation control proportion comprises a reactive power compensation control proportion, and the reactive power compensation control proportion is a proportion of reactive power output by each distributed generation to the total reactive power output by the power supply system; and
the detection control unit is further configured to: when it is detected that the oscillation of the power supply system exceeds the preset threshold range, number each distributed generation in ascending order of impedance from the distributed generations to the point of common coupling, obtain the reactive power compensation control proportion of each distributed generation based on a number of each distributed generation and N, and control, based on the reactive power compensation control proportion, each distributed generation to output the reactive power.

8. The system according to claim 7, wherein the reactive power compensation control proportion $\varepsilon_{q(k)}$ of a distributed generation numbered k in the N distributed generations satisfies:

$$\varepsilon_{q(k)} = \frac{1}{N} + (k - \frac{N}{2})G_{reg\_q} ;$$

and

the reactive power $Q_{ref(k)}$ output by the distributed generation numbered k in the N distributed generations satisfies:

$$Q_{ref(k)} = Q_{all}\varepsilon_{q(k)} ,$$

wherein

k is an integer greater than or equal to 1 and less than or equal to N, $\quad G_{reg\_q} = K_{q\_p} + \dfrac{K_{q\_i}}{s}$ , $K_{q\_p}$ is a second proportional coefficient, $K_{q\_i}$ is a second integral coefficient, s is a Laplace operator, and $Q_{all}$ is the total reactive power output by the power supply system.

9. The system according to any one of claims 1 to 8, wherein

the detection control unit is further configured to: collect a current and a voltage of the point of common coupling of the power supply system, and obtain an effective value of an oscillation component of the voltage, an effective value of an oscillation component of the current, and an effective value of an oscillation component of a system frequency based on the voltage and the current of the point of common coupling; and

the detection control unit is further configured to: when the effective value of the oscillation component of the voltage is greater than a third threshold, the effective value of the oscillation component of the current is greater than a fourth threshold, and/or the effective value of the oscillation component of the system frequency is greater than a fifth threshold, learn that the oscillation of the power supply system exceeds the preset threshold range.

10. A power control method for a power supply system, wherein the method is applicable to at least one detection control unit in the power supply system, the power supply system further comprises N distributed generations, the N distributed generations are connected in parallel or in series and then connected to a power grid, N is an integer greater than 1, and the method comprises:

when it is detected that oscillation of the power supply system exceeds a preset threshold range, obtaining a power compensation control proportion of each distributed generation based on impedance from each distributed generation to a point of common coupling of the power supply system, wherein the power compensation control proportion is a proportion of power output by each distributed generation to total power output by the power supply system; and

controlling a power output proportion of each distributed generation based on the power compensation control proportion.

11. The method according to claim 10, wherein

when impedance from a first distributed generation in the N distributed generations to the point of common coupling is greater than a first threshold, active power output by the first distributed generation is controlled to be less than first preset power; or

when impedance from the first distributed generation to the point of common coupling is less than or equal to the first threshold, active power output by the first distributed generation is controlled to be greater than or equal to the first preset power.

12. The method according to claim 10, wherein

when impedance from a second distributed generation in the N distributed generations to the point of common coupling is greater than a second threshold, reactive power output by the second distributed generation is controlled to be greater than second preset power; or

when impedance from the second distributed generation to the point of common coupling is less than or equal to the second threshold, reactive power output by the second distributed generation is controlled to be less than or equal to the second preset power.

13. The method according to any one of claims 10 to 12, wherein when it is detected that the oscillation of the power supply system exceeds the preset threshold range, a sum of active power output by the N distributed generations is controlled to be equal to total active power output by the power supply system before the oscillation of the power supply system exceeds the preset threshold range, and a sum of reactive power output by the N distributed generations is controlled to be equal to total reactive power output by the power supply system before the oscillation of the power supply system exceeds the preset threshold range.

14. The method according to any one of claims 10 to 13, wherein the power compensation control proportion comprises an active power compensation control proportion, and the active power compensation control proportion is a proportion of active power output by each distributed generation to the total active power output by the power supply system; and

when it is detected that the oscillation of the power supply system exceeds the preset threshold range, each distributed generation is numbered in ascending order of impedance from the distributed generations to the point of common coupling, the active power compensation control proportion of each distributed generation is obtained based on a number of each distributed generation and N, and each distributed generation is controlled, based on the active power compensation control proportion, to output the active power.

15. The method according to claim 14, wherein the active power compensation control proportion $\varepsilon_{p(k)}$ of a distributed generation numbered k in the N distributed generations satisfies:

$$\varepsilon_{p(k)} = \frac{1}{N} - (k - \frac{N}{2})G_{reg\_p};$$

and

the active power $P_{ref(k)}$ output by the distributed generation numbered k in the N distributed generations satisfies:

$$P_{ref(k)} = P_{all}\varepsilon_{p(k)} + (SOC_{ave} - SOC_k)G_{pi\_soc},$$

wherein

k is an integer greater than or equal to 1 and less than or equal to N, $G_{reg\_p} = K_{p\_p} + \dfrac{K_{p\_i}}{s}$, $K_{p\_p}$ is a first proportional coefficient, $K_{p\_i}$ is a first integral coefficient, s is a Laplace operator, $P_{all}$ is the total active power output by the power supply system, $SOC_{ave}$ is an average value of states of charge SOCs of the N distributed generations, $SOC_k$ is an SOC of the distributed generation numbered k, and $G_{pi\_soc}$ is a transfer function.

16. The method according to any one of claims 10 to 13, wherein the power compensation control proportion comprises a reactive power compensation control proportion, and the reactive power compensation control proportion is a proportion of reactive power output by each distributed generation to the total reactive power output by the power supply system; and
when it is detected that the oscillation of the power supply system exceeds the preset threshold range, each distributed generation is numbered in ascending order of impedance from the distributed generations to the point of common coupling, the reactive power compensation control proportion of each distributed generation is obtained based on a number of each distributed generation and N, and each distributed generation is controlled, based on the reactive power compensation control proportion, to output the reactive power.

17. The method according to claim 16, wherein the reactive power compensation control proportion $\varepsilon_{q(k)}$ of a distributed generation numbered k in the N distributed generations satisfies:

$$\varepsilon_{q(k)} = \frac{1}{N} + (k - \frac{N}{2})G_{reg\_q};$$

and

the reactive power $Q_{ref(k)}$ output by the distributed generation numbered k in the N distributed generations satisfies:

$$Q_{ref(k)} = Q_{all}\varepsilon_{q(k)};$$

wherein

k is an integer greater than or equal to 1 and less than or equal to N, $G_{reg\_q} = K_{q\_p} + \dfrac{K_{q\_i}}{s}$, $K_{q\_p}$ is a second proportional coefficient, $K_{q\_i}$ is a second integral coefficient, s is a Laplace operator, and $Q_{all}$ is the total reactive power output by the power supply system.

18. The method according to any one of claims 10 to 17, wherein

a current and a voltage of the point of common coupling of the power supply system are collected, and an effective value of an oscillation component of the voltage, an effective value of an oscillation component of the current, and an effective value of an oscillation component of a system frequency are obtained based on the voltage and the current of the point of common coupling; and

when the effective value of the oscillation component of the voltage is greater than a third threshold, the effective value of the oscillation component of the current is greater than a fourth threshold, and/or the effective value of the oscillation component of the system frequency is greater than a fifth threshold, it is learned that the oscillation of the power supply system exceeds the preset threshold range.

Power supply system

Battery pack

Detection control unit

Power grid

Household device

FIG. 1

FIG. 2

FIG. 3

FIG. 4

Power supply system

Power supply
module 30

Alternating-current
load/Alternating-
current power grid

40

FIG. 5

Collect a current and a voltage of a point of common
coupling of a power supply system

S601

Obtain an effective value of an oscillation
component of the voltage, an effective value of an
oscillation component of the current, and an effective
value of an oscillation component of a system
frequency based on the voltage and the current of the
point of common coupling

S602

S605

Control a power output
proportion of each
distributed generation
in an SOC equalization
control manner

No

Determine
whether oscillation of the power
supply system exceeds a preset
threshold range

S603

Yes

Obtain a power compensation control proportion of
each distributed generation based on impedance from
each distributed generation to the point of common
coupling of the power supply system, and control a
power output proportion of each distributed
generation based on the power compensation control
proportion

S604

FIG. 6

# INTERNATIONAL SEARCH REPORT

| International application No. |
|---|
| **PCT/CN2023/101352** |

| A. | CLASSIFICATION OF SUBJECT MATTER |
|---|---|

H02J3/00(2006.01)i;  H02J3/24(2006.01)i;  H02J3/38(2006.01)i;  H02J3/46(2006.01)i

According to International Patent Classification (IPC) or to both national classification and IPC

| B. | FIELDS SEARCHED |
|---|---|

Minimum documentation searched (classification system followed by classification symbols)

H02J G06F G06Q

Documentation searched other than minimum documentation to the extent that such documents are included in the fields searched

Electronic data base consulted during the international search (name of data base and, where practicable, search terms used)

CNABS, CNTXT, ENTXT, ENTXTC, CNKI, IEEE: 电网, 并网, 阻抗, 有功, 无功, 补偿, 比例, grid, impendance, active, reactive, power, compensat+, ratio

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 115498631 A (HUAWEI DIGITAL ENERGY TECHNOLOGY CO., LTD.) 20 December 2022 (2022-12-20)<br>claims 1-18 | 1-18 |
| X | CN 114884100 A (CHINA THREE GORGES CORPORATION et al.) 09 August 2022 (2022-08-09)<br>description, paragraphs 37-120, and figures 1-7 | 1-5, 7, 9-14, 16, 18 |
| A | CN 112886647 A (STATE GRID JIANGSU ELECTRIC POWER CO., LTD., TAIZHOU POWER SUPPLY BRANCH et al.) 01 June 2021 (2021-06-01)<br>entire document | 1-18 |
| A | CN 114614490 A (BEIJING GOLDWIND SCIENCE & CREATION WINDPOWER EQUIPMENT CO., LTD.) 10 June 2022 (2022-06-10)<br>entire document | 1-18 |
| A | KR 20160060851 A (POSCO ICT CO., LTD.) 31 May 2016 (2016-05-31)<br>entire document | 1-18 |
| A | US 2014032000 A1 (SIEMENS CORPORATION) 30 January 2014 (2014-01-30)<br>entire document | 1-18 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 September 2023** | **14 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/101352**

| Patent document cited in search report | | | Publication date (day/month/year) | Patent family member(s) | | | Publication date (day/month/year) |
|---|---|---|---|---|---|---|---|
| CN | 115498631 | A | 20 December 2022 | None | | | |
| CN | 114884100 | A | 09 August 2022 | None | | | |
| CN | 112886647 | A | 01 June 2021 | None | | | |
| CN | 114614490 | A | 10 June 2022 | None | | | |
| KR | 20160060851 | A | 31 May 2016 | KR | 101673057 | B1 | 07 November 2016 |
| US | 2014032000 | A1 | 30 January 2014 | US | 9640997 | B2 | 02 May 2017 |

Form PCT/ISA/210 (patent family annex) (July 2022)

**EP 4 579 974 A1**

**Patent documents cited in the description**

- CN 202211131357